# EUROPÄISCHE PATENTSCHRIFT

(11) **EP 2 118 531 B1**
(45) Veröffentlichungstag und Bekanntmachung des Hinweises auf die Patenterteilung: **23.02.2011**
(21) Anmeldenummer: 08701280.3
(22) Anmeldetag: 08.01.2008
(51) Int. Cl.: F16H 63/30, F16H 61/688, F16H 63/36

(54) **VORRICHTUNG ZUR NOTENTRIEGELUNG VON DOPPELKUPPLUNGSGETRIEBEN**
DEVICE FOR EMERGENCY DISENGAGEMENT OF DOUBLE-CLUTCH GEARBOXES
DISPOSITIF DE DÉVERROUILLAGE D'URGENCE DE TRANSMISSIONS À DOUBLE EMBRAYAGE

(30) Priorität: 10.02.2007 DE 102007006681
(43) Veröffentlichungstag der Anmeldung: 18.11.2009
(73) Patentinhaber: ZF Friedrichshafen AG, 88038 Friedrichshafen (DE)
(72) Erfinder: EBENHOCH, Michael, 88069 Tettnang (DE); DRABEK, Michael, 14776 Brandenburg (DE)
(86) Internationale Anmeldenummer: PCT/EP2008/050104
(87) Internationale Veröffentlichungsnummer: WO 2008/095741

(56) Entgegenhaltungen:
- WO-A-2007/000269
- JP-A- 2007 016 949

## Beschreibung

Die vorliegende Erfindung bezieht sich auf eine Notentriegelungsvorrichtung eines Getriebes gemäß dem Oberbegriff des Patentanspruchs 1.

Speziell in Doppelkupplungsgetrieben kann aufgrund eines Fehlers die Situation entstehen, dass der eingelegte Gang nicht mehr herausgenommen werden kann. Dies kann im Abschleppfall zu Überdrehzahlen führen, wodurch Getriebekomponenten beschädigt werden können. Aus dem Stand der Technik, beispielsweise aus der DE 102004036498 A1 der Anmelderin, sind zwar Einrichtungen zur Rastierung und Verriegelung für Mehrfachkupplungsgetriebe bekannt; jedoch ist keine Möglichkeit bekannt, um alle eingelegten Gänge wieder nach Neutral zurückzuführen.

Das Dokument JP 2007016949 A welches alle Merkmale des Oberbegriffs des Anspruchs 1 offenbart, zeigt eine Notentriegelungsvorrichtung eines Getriebes, welche eine Notentriegelungsstange aufweist, die dazu geeignet ist Schaltelemente des Getriebes in ihre Neutralstellung zu verschieben.

Der vorliegenden Erfindung liegt daher die Aufgabe zugrunde, eine Notentriegelungsvorrichtung speziell von Doppelkupplungsgetrieben anzugeben.

Diese Aufgabe wird durch die Merkmale des Patentanspruchs 1 gelöst.
Weitere erfindungsgemäße Ausgestaltungen und Vorteile gehen aus den Unteransprüchen hervor.

Demnach wird eine Notentriegelungsvorrichtung von Doppelkupplungsgetrieben vorgeschlagen, durch deren Betätigung alle Schaltelemente im Fehlerfall nach Neutral geschaltet werden. Dies ist erforderlich, da bei einem Doppelkupplungsgetriebe prinzipbedingt ein oder zwei Schaltelemente in einem Doppelkupplungsgetriebe geschaltet sein können und nicht eindeutig festzulegen ist, welche Schaltelemente im Fehlerfall betroffen sind.

Die Vorrichtung weist eine Notentriegelungsstange auf, auf der Schaltelemente drehfest angeordnet sind, wobei die Schaltelemente eine Öffnung aufweisen, welche an einer ausgewählten Stelle den gesamten Schaltweg jeweils einer Schaltschwinge oder Schubgabel des Getriebes überdeckt und wobei durch Betätigung der Notentriegelungsstange die den Schaltelementen zugeordneten und geschalteten Schaltschwingen bzw. Schubgabeln des Getriebes über den halben Schaltweg nach Neutral gedrückt werden.

Wird die Notentriegelungsstange in Richtung ihrer Längsachse um den halben Schaltweg in die eine und anschließend in die andere Richtung axial verschoben, so wird erfindungsgemäß die einem Schaltelement zugeordnete Schaltschwinge bzw. Schubgabel über die halbe Strecke nach Neutral gedrückt. Dies passiert mit allen Schaltelementen, unabhängig von deren aktuellen Schaltstatus.

Gemäß einer ersten vorteilhaften Ausführungsform der Erfindung umfasst die Vorrichtung zur Notentriegelung eine Notentriegelungsstange, auf der Y-förmig ausgebildete Schaltelemente derart angeordnet sind, dass sie im nicht betätigten Zustand mit der Y-Öffnung den gesamten Schaltweg jeweils einer Schaltschwinge oder Schubgabel an einer ausgewählten Stelle überdecken.

Eine weitere Möglichkeit alle Schaltschwingen bzw. Schubgabeln mittels der Vorrichtung zur Notentriegelung nach Neutral zu drücken besteht darin, dass die Notentriegelungsstange senkrecht zur Längsachse in Richtung auf die Schaltschwingen bzw. Schubgabeln um eine definierte Strecke verschoben wird. Durch die Y-Form der Schaltelemente werden die den Schaltelementen zugeordneten Schaltschwingen bzw. Schubgabeln nach Neutral gedrückt. Vorzugsweise entspricht die Breite der Bodenwand der Y-förmigen Schaltelemente der Breite einer Schaltschwinge bzw. Schubgabel, so dass, wenn die Notentriegelungswelle in dieser Position bleibt, gleichzeitig das erneute unbeabsichtigte Einlegen der Schaltelemente verhindert wird.

Im Rahmen einer weiteren nicht erfindungsgemäßen Ausführungsform weisen die auf der Notentriegelungswelle angeordneten Schaltelemente einen koaxial zur Notentriegelungswelle angeordneten Zylinder auf, aus dem senkrecht zur Längsachse zwei Führungsflächen herausragen, die entlang des halben Zylinderumfangs zusammenlaufen und anschließend auseinanderlaufen, wobei der Abstand zwischen den beiden Führungsflächen an einer Stelle dem gesamtem Schaltweg und an einer diametral gegenüberliegenden Stelle der Breite einer Schubgabel bzw. einer Schaltschwinge entspricht.

Im nicht betätigten Zustand der Vorrichtung zur Notentriegelung befindet sich der der Vorrichtung zugewandte Teil der Schubgabeln bzw. Schaltschwingen zwischen den Führungsflächen an der Stelle, bei der der Abstand zwischen den Führungsflächen dem gesamtem Schaltweg entspricht.

Wenn die Notentriegelungsstange um 180° gedreht wird, wird die einem Schaltelement zugeordnete Schaltschwinge bzw. Schubgabel über die halbe Strecke nach Neutral gedrückt, wobei dies mit allen Schaltelementen, unabhängig von deren aktuellen Schaltstatus passiert. Wenn die Notentriegelungsstange in dieser Position bleibt, wird auch gleichzeitig das erneute unbeabsichtigte Einlegen der Schaltelemente verhindert, da sich der der Vorrichtung zugewandte Teil der Schubgabeln bzw. Schaltschwingen zwischen den Führungsflächen an der Stelle befindet, bei der der Abstand zwischen den Führungsflächen der Breite der Schubgabel bzw. der Schaltschwinge entspricht.

Durch die erfindungsgemäße Konzeption wird eine einfach aufgebaute Vorrichtung zur Notentriegelung von Doppelkupplungsgetrieben zur Verfügung gestellt, wodurch gewährleistet wird, dass alle Schaltelemente, unabhängig von deren aktuellen Schaltstatus nach Neutral geschaltet werden bzw. in der Position Neutral verbleiben, so dass das Fahrzeug ohne die Gefahr der Beschädigung von Getriebekomponenten abgeschleppt werden kann.

In vorteilhafter Weise kann die Notentriegelungsstange mit der Notentriegelung der Parksperre des Getriebes verbunden sein; es ist aber auch möglich, dass die Notentriegelungsstange einzeln angesteuert werden kann.

Die Erfindung wird im folgenden anhand der beigefügten Figuren beispielhaft näher erläutert.

Es zeigen:
- Fig. 1: eine schematische Darstellung einer bevorzugten Ausfüh- rungsform der Vorrichtung zur Notentriegelung gemäß der Erfindung;
- Fig. 2: eine Darstellung der Durchführung der Notentriegelung durch eine Verschiebung der Notentriegelungsstange in Richtung ihrer Längsachse;
- Fig. 3: eine nicht erfindungsgemäße Ausführungsform der Durch- führung der Notentriegelung durch eine Verschiebung der Notentriegelungsstange senkrecht zur Längsachse in Rich- tung auf die Schaltschwingen bzw. Schubgabeln um eine definierte Strecke und
- Fig. 4: eine weitere nicht erfindungsgemäße Ausführungsform der Vorrichtung zur Notentriegelung.

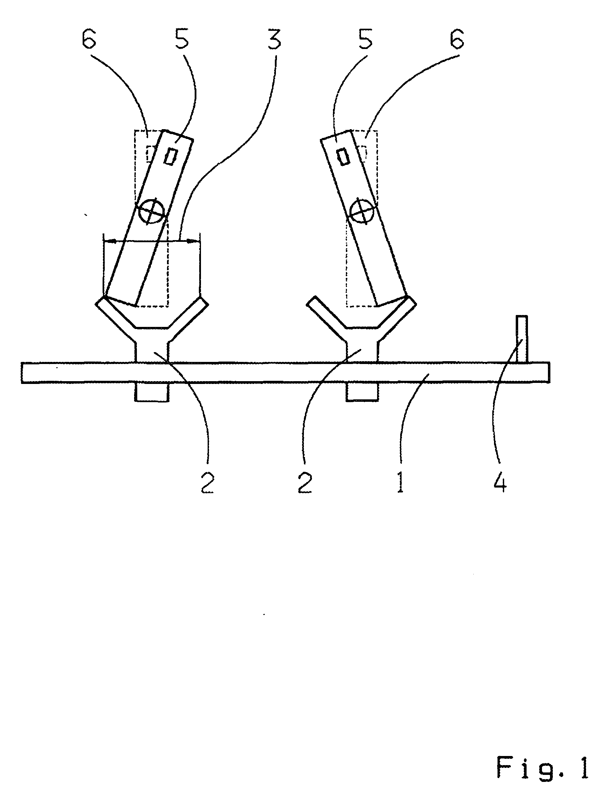

Bezug nehmend auf Fig. 1 umfasst die erfindungsgemäße Vorrichtung zur Notentriegelung eine Notentriegelungsstange 1, welche beispielsweise über ein Betätigungselement 4 betätigt werden kann. Auf der Notentriegelungsstange 1 sind Schaltelemente 2 drehfest angeordnet, welche vorzugsweise Y-förmig ausgebildet sind. Hierbei überdeckt die Y - Öffnung der Schaltelemente 2 den gesamten Schaltweg 3 jeweils einer Schaltschwinge oder Schubgabel 5 des Getriebes an einer ausgewählten Stelle. In der Figur sind zwei Schaltschwingen 5 im geschalteten Zustand gezeigt; mit 6 ist die Anordnung der Schaltschwingen in der Position Neutral veranschaulicht.

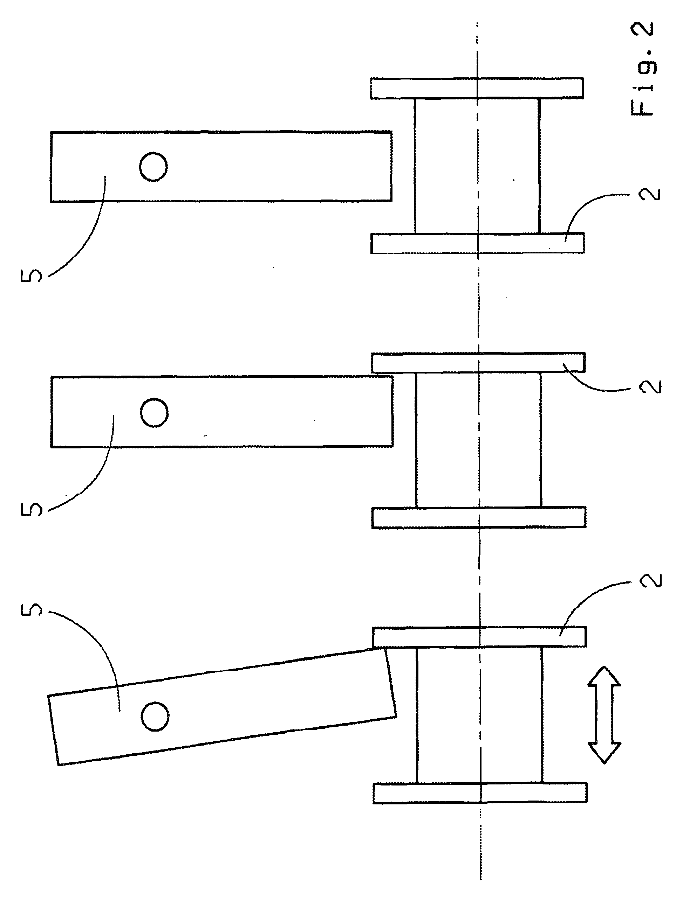

Wird nun die Notentriegelungsstange 1 in Richtung ihrer Längsachse um den halben Schaltweg in die eine und anschließend von der Neutralstellung aus betrachtet in die andere Richtung axial verschoben und anschließend in die neutrale Stellung gebracht, so wird erfindungsgemäß die einem Schaltelement 2 zugeordnete und geschaltete Schaltschwinge bzw. Schubgabel 5 über die halbe Strecke (den halben Schaltweg) nach Neutral gedrückt. Dies passiert mit allen Schaltelementen, unabhängig von deren aktuellen Schaltstatus. Diese Vorgehensweise ist in Fig. 2 veranschaulicht.

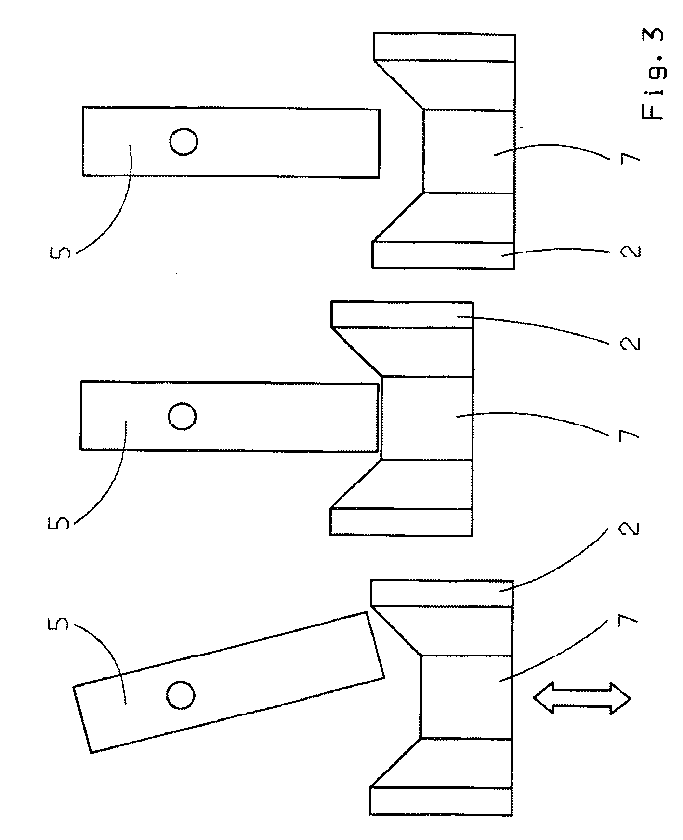

Alternativ dazu kann, wie anhand Fig. 3 in einer nicht erfindungsgemäßen Ausführungsform veranschaulicht, die Notentriegelungsstange 1 senkrecht zur Längsachse in Richtung auf die Schaltschwingen bzw. Schubgabeln um eine definierte Strecke verschoben werden. Durch die Y-Form der Schaltelemente 2 werden die den Schaltelementen zugeordneten Schaltschwingen bzw. Schubgabeln 5 nach Neutral gedrückt. Vorzugsweise entspricht die Breite der Bodenwand 7 der Y-förmigen Schaltelemente der Breite einer Schaltschwinge bzw. Schubgabel, so dass, wenn die Notentriegelungsstange nach erfolgter Notentriegelung in dieser Position bleibt, gleichzeitig das erneute unbeabsichtigte Einlegen der Schaltelemente über die Schaltschwingen bzw. Schubgabeln verhindert wird.

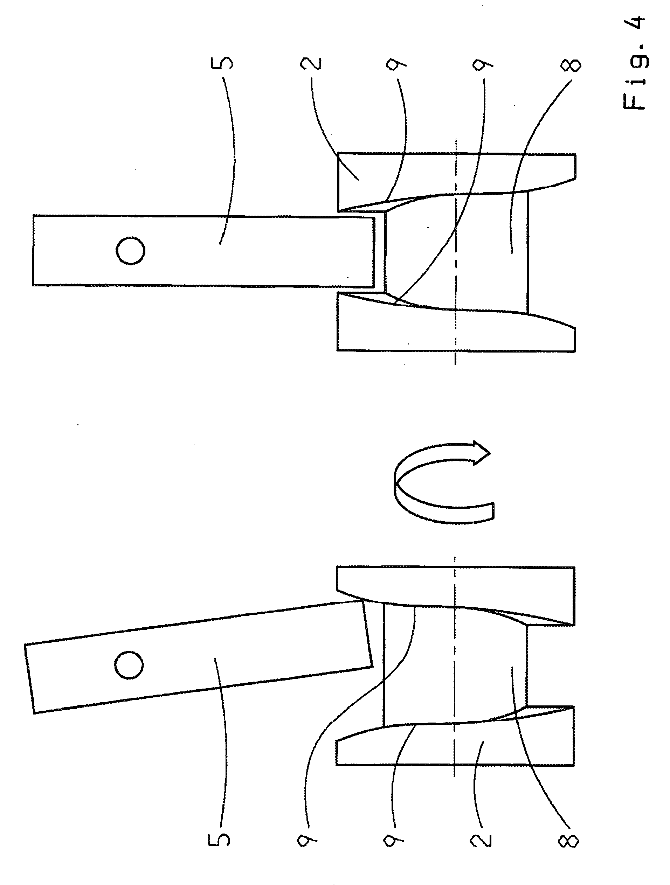

Bei der in Fig. 4 gezeigten nicht erfindungsgemäßen Ausführungsform weisen die auf der Notentriegelungsstange 1 angeordneten Schaltelemente 2 einen koaxial zur Notentriegelungsstange angeordneten Zylinder 8 auf, aus dem senkrecht zur Längsachse zwei Führungsflächen 9 herausragen, die entlang des halben Zylinderumfangs zusammenlaufen und anschließend auseinanderlaufen, wobei der Abstand zwischen den beiden Führungsflächen 9 an einer Stelle dem gesamtem Schaltweg einer Schaltschwinge bzw. Schubgabel 5 und an einer diametral gegenüberliegenden Stelle der Breite einer Schubgabel bzw. einer Schaltschwinge 5 entspricht. Im nicht betätigten Zustand der Vorrichtung zur Notentriegelung befindet sich der der Vorrichtung zugewandte Teil der Schubgabeln bzw. Schaltschwingen zwischen den Führungsflächen 9 an der Stelle, bei der der Abstand zwischen den Führungsflächen dem gesamtem Schaltweg entspricht.

Wenn die Notentriegelungsstange 1 um 180° gedreht wird, wird die einem Schaltelement 2 zugeordnete Schaltschwinge bzw. Schubgabel 5 über die halbe Strecke bzw. über den halben Schaltweg nach Neutral gedrückt, wie anhand des rechten Teils der Fig. 4 ersichtlich. Wenn die Notentriegelungsstange 1 in dieser Position bleibt, wird auch gleichzeitig das erneute unbeabsichtigte Einlegen der Schaltelemente verhindert.

## Patentansprüche

1. Notentriegelungsvorrichtung eines Getriebes mit einer Notentriegelungsstange (1), **dadurch gekennzeichnet, dass** das Getriebe ein Doppelkupplungsgetriebe ist, und auf der Notentriegelungsstange (1) Schaltelemente (2) drehfest angeordnet sind, wobei die Schaltelemente (2) eine Öffnung aufweisen, welche an einer ausgewählten Stelle den gesamten Schaltweg (3) jeweils einer Schaltschwinge oder Schubgabel (5) des Getriebes überdeckt und wobei durch Betätigung der Notentriegelungsstange (1) die den Schaltelementen (2) zugeordneten und geschalteten Schaltschwingen bzw. Schubgabeln (5) des Getriebes über den halben Schaltweg nach Neutral gedrückt werden, wobei die auf der Notentriegelungsstange (1) angeordneten Schaltelemente (2) derart angeordnet sind, dass bei einer axialen Verschiebung der Notentriegelungsstange (1) in Richtung ihrer Längsachse um den halben Schaltweg in die eine und anschließend von der Neutralstellung aus betrachtet um den halben Schaltweg in die andere Richtung und anschließend in die neutrale Stellung, die geschalteten Schaltschwingen bzw. Schubgabeln (5) des Getriebes nach Neutral gedrückt werden.

2. Notentriegelungsvorrichtung nach Anspruch 1, **dadurch gekenn** - **zeichnet** , dass die Schaltelemente (2) Y-förmig ausgebildet sind.

3. Notentriegelungsvorrichtung nach Anspruch 2, **dadurch gekenn** - **zeichnet** , dass die auf der Notentriegelungsstange (1) angeordneten Schaltelemente (2) derart angeordnet sind, dass bei einer Verschiebung der Notentriegelungsstange (1) senkrecht zur Längsachse in Richtung auf die Schaltschwingen bzw. Schubgabeln (5) um eine definierte Strecke die geschalteten Schaltschwingen bzw. Schubgabeln (5) des Getriebes durch die Y-Form der Schaltelemente (2) nach Neutral gedrückt werden.

4. Notentriegelungsvorrichtung nach Anspruch 3, **dadurch gekenn** - **zeichnet**, dass die Breite der Bodenwand (7) der Y-förmigen Schaltelemente (2) der Breite einer Schaltschwinge bzw. Schubgabel (5) entspricht, so dass, bei erfolgter Notentriegelung gleichzeitig das erneute unbeabsichtigte Einlegen der Schaltelemente über die Schaltschwingen bzw. Schubgabeln (5) verhindert wird.

5. Notentriegelungsvorrichtung nach einem der vorangehenden Ansprüche, **dadurch gekennzeichnet, dass** die Notentriegelungsstange (1) mit der Notentriegelung der Parksperre des Getriebes verbunden ist.

## Claims

1. Emergency disengagement device of a gearbox having an emergency disengagement rod (1), **characterized in that** the gearbox is a double-clutch gearbox and shift elements (2) are arranged on the emergency disengagement rod (1) for conjoint rotation therewith, wherein the shift elements (2) have an opening which, at a selected point of the overall shift travel (3), overlaps in each case one shift rocker or pusher fork (5) of the gearbox, and wherein as a result of actuation of the emergency disengagement rod (1), the engaged shift rockers or pusher forks (5), which are assigned to the shift elements (2), of the gearbox are pushed over half the shift travel to neutral, wherein the shift elements (2) arranged on the emergency disengagement rod (1) are arranged such that, in the event of an axial movement of the emergency disengagement rod (1) in the direction of its longitudinal axis by half the shift travel in one
direction and subsequently, as viewed from the neutral position, by half the shift travel in the other direction and subsequently into the neutral position, the engaged shift rockers or pusher forks (5) of the gearbox are pushed to neutral.

2. Emergency disengagement device according to Claim 1, **characterized in that** the shift elements (2) are of Y-shaped design.

3. Emergency disengagement device according to Claim 2, **characterized in that** the shift elements (2) arranged on the emergency disengagement rod (1) are arranged such that, in the event of a movement of the emergency disengagement rod (1) perpendicular to its longitudinal axis in the direction of the shift rockers or pusher forks (5) by a defined distance, the engaged shift rockers or pusher forks (5) of the gearbox are pushed to neutral by the Y-shape of the shift elements (2).

4. Emergency disengagement device according to Claim 3, **characterized in that** the width of the base wall (7) of the Y-shaped shift elements (2) corresponds to the width of a shift rocker or pusher fork (5) such that, when emergency disengagement has taken place, an inadvertent renewed engagement of the shift elements by means of the shift rockers or pusher forks (5) is simultaneously prevented.

5. Emergency disengagement device according to one of the preceding claims, **characterized in that** the emergency disengagement device (1) is connected to the emergency disengagement facility of the parking lock of the gearbox.

## Revendications

1. Dispositif de déverrouillage d'urgence d'une transmission comprenant une tige de déverrouillage d'urgence (1), **caractérisé en ce que** la transmission est une transmission à double embrayage, et des éléments de changement de vitesse (2) sont disposés de manière solidaire en rotation sur la tige de déverrouillage d'urgence (1), les éléments de changement de vitesse (2) présentant une ouverture qui, en un point sélectionné de la voie de changement de vitesse totale (3), recouvre à chaque fois une fourchette de changement de vitesse ou une fourche à coulissement (5) de la transmission, les fourchettes de changement de vitesse ou les fourches à coulissement (5) de la transmission, associées aux éléments de changement de vitesse (2) et commutées, étant pressées vers la position neutre par le biais de la demie voie de changement de vitesse par l'actionnement de la tige de déverrouillage d'urgence (1), les éléments de changement de vitesse (2) disposés sur la tige de déverrouillage d'urgence (1) étant disposés de telle sorte que, dans le cas d'un coulissement axial de la tige de déverrouillage d'urgence (1) dans la direction de son axe longitudinal sur la demie voie de changement de vitesse dans une direction, puis, considéré depuis la position neutre, sur la demie voie de changement de vitesse dans l'autre direction, et ensuite encore dans la position neutre, les fourchettes de changement de vitesse ou les fourches à coulissement (5) de la transmission soient pressées vers la position neutre.

2. Dispositif de déverrouillage d'urgence selon la revendication 1, **caractérisé en ce que** les éléments de changement de vitesse (2) sont réalisés en forme de Y.

3. Dispositif de déverrouillage d'urgence selon la revendication 2, **caractérisé en ce que** les éléments de changement de vitesse (2) disposés sur la tige de déverrouillage d'urgence (1) sont disposés de telle sorte que dans le cas d'un coulissement de la tige de déverrouillage d'urgence (1) perpendiculairement à l'axe longitudinal dans la direction des fourchettes de changement de vitesse ou des fourches à coulissement (5) sur une distance définie, les fourchettes de changement de vitesse ou les fourches à coulissement (5) de la transmission engagées soient pressées vers la position neutre par la forme en Y des éléments de changement de vitesse (2).

4. Dispositif de déverrouillage d'urgence selon la revendication 3, **caractérisé en ce que** la largeur de la paroi de fond (7) des éléments de changement de vitesse (2) en forme de Y correspond à la largeur des fourchettes de changement de vitesse ou des fourches à coulissement (5), de sorte que dans le cas d'un déverrouillage d'urgence réussi, l'enclenchement renouvelé accidentel des éléments de changement de vitesse par le biais des fourchettes de changement de vitesse ou des fourches à coulissement (5) soit simultanément empêché.

5. Dispositif de déverrouillage d'urgence selon l'une quelconque des revendications précédentes, **caractérisé en ce que** la tige de déverrouillage d'urgence (1) est connectée au déverrouillage d'urgence du verrouillage de stationnement de la transmission.
